(19) Europäisches Patentamt
European Patent Office
Office européen des brevets

(11) **EP 1 478 061 B1**

(12) **EUROPEAN PATENT SPECIFICATION**

(45) Date of publication and mention
of the grant of the patent:
**03.01.2007 Bulletin 2007/01**

(51) Int Cl.:
***H01S 3/05*** (2006.01)   ***H01S 3/06*** (2006.01)

(21) Application number: **02760589.8**

(22) Date of filing: **08.08.2002**

(86) International application number:
**PCT/JP2002/008114**

(87) International publication number:
**WO 2003/065519 (07.08.2003 Gazette 2003/32)**

(54) **OPTICAL ELEMENT**

OPTISCHES ELEMENT

ELEMENT OPTIQUE

(84) Designated Contracting States:
**DE FR**

(30) Priority: **01.02.2002 JP 2002025040**

(43) Date of publication of application:
**17.11.2004 Bulletin 2004/47**

(73) Proprietor: **Japan Science and Technology
Agency
Kawaguchi-shi,
Saitama 332-0012 (JP)**

(72) Inventors:
- **TAIRA, Takunori
7-22, Tatsumigaoka
Okazaki-shi, Aichi 444-0874 (JP)**
- **SHOJI, Ichiro
8-23, Tatsumigaoka
Okazaki-shi, Aichi 444-0874 (JP)**

(74) Representative: **Hoarton, Lloyd Douglas Charles
Forrester & Boehmert
Pettenkoferstrasse 20-22
80336 München (DE)**

(56) References cited:
**JP-A- 5 330 991     US-A- 5 851 284**

- **I. I. KARPOV ET AL.: "Use of polarized
luminescence to investigate luminescence in
yttrium-aluminium garnet crystals with added
titanium" SOV. PHYS. CRYSTALLOGR., vol. 23,
no. 6, November 1978 (1978-11), pages 688-690,
XP009044420 USA**

- **SHOJI ICHIRO ET AL: "Intrinsic reduction of the
depolarization loss in solid-state lasers by use of
a (110)-cut <formula><roman>Y</
roman><inf>3</inf><roma n>
Al< /roman><inf>5</inf><
roman>O</roman><inf>12 </
inf></formula> crystal" APPLIED
PHYSICS LETTERS, AMERICAN INSTITUTE OF
PHYSICS. NEW YORK, US, vol. 80, no. 17, 29 April
2002 (2002-04-29), pages 3048-3050,
XP012030678 ISSN: 0003-6951**

- **SHOJI I ET AL: "Great reduction of depolarization
loss by use of a [110]-cut YAG crystal"
CONFERENCE ON LASERS AND ELECTRO-
OPTICS. (CLEO 2002). TECHNICAL DIGEST.
POSTCONFERENCE EDITION. LONG BEACH,
CA, MAY 19 - 24, 2002, TRENDS IN OPTICS AND
PHOTONICS. (TOPS), WASHINGTON, WA : OSA,
US, vol. VOL. 73, 19 May 2002 (2002-05-19), pages
178-179, XP010606586 ISBN: 1-55752-706-7**

- **ICHIRO SHOJI ET AL.: "Reduction of
depolarization caused by thermally induced
birefringence using a (110)-cut YAG crystal; 30p-
ZG-6" DAI 49 KAI OYO BUTSURIGAKU KANKEI
RENGO KOENKAI KOEN YOKOSHU, vol. 3, 27
March 2002 (2002-03-27), page 1058,
XP002967080**

- **ICHIRO SHOJI ET AL.: ’(199) cut no YAG kessho
ni yoru netsufuku kessetsu yuki depolarization
no teigen’ DAI 62 KAI EXTENDED ABSTRACTS;
THE JAPAN SOCIETY OF APPLIED PHYSICS,
12A-ZK-3 vol. 3, 11 September 2001, page 799,
XP002967079**

(Cont. next page)

- **ICHIRO SHOJI ET AL.: '(110) Cut no YAG kessho ni yoru netsufuku kussetsu yuki depolarization no teigen' DAI 49 KAI OYO BUTSURIGAKU KANKEI RENGO KOENKAI KOEN YOKOSHU, 30P-ZG-6 vol. 3, 27 March 2002, page 1058, XP002967080**
- **ICHIRO SHOJI ET AL.: 'Intrinsic reduction of the depolarization loss in solid-state lasers by use of a (110)-cut Y3Al5O12 crystal' APPLIED PHYSICS LETTERS vol. 80, no. 17, 29 April 2002, pages 3048 - 3050, XP001122514**
- **ICHIRO SHOJI ET AL.: 'Thermal-birefringence-induced depolarization in Nd:YAG ceramics' OPTICS LETTERS vol. 27, no. 4, 15 February 2002, pages 234 - 236, XP002967082**
- **ISHIBASHI S. ET AL.: 'Cr,Ca: Y3al5O12 laser crystal grown by the laser-heated pedestal growth method' JOURNAL OF CRYSTAL GROWTH vol. 183, February 1998, pages 614 - 621, XP004112646**
- **YANG PEIZHI ET AL.: 'The growth defects in Czochralski-grown Yb:YAG crystal' JOURNAL OF CRYSTAL GROWTH vol. 218, September 2000, pages 87 - 92, XP004214615**
- **KOECHNER W. ET AL.: 'Effect of birefringence on the performance of linearly polarized YAG:Nd lasers' IEEE JOURNAL OF QUANTUM ELECTRONICS, QE-6 June 1970, pages 557 - 566, XP002967083**
- **KOECHNER W. ET AL.: 'Birefringence of YAG:Nd laser rods as a function of growth direction' JOURNAL OF THE OPTICAL SOCIETY OF AMERICA vol. 61, no. 6, June 1971, pages 758 - 766, XP002967084**
- **VLADIMIR PARFENOV ET AL.: 'Numerical investigation of thermally induced birefringence in optical elements of solkid-state lasers' APPLIED OPTICS vol. 32, no. 27, 20 September 1993, pages 5243 - 5255, XP002967085**
- **SHOJI I. ET AL.: 'Thermal birefringence in Nd: YAG ceramics' TRENDS IN OPTICS AND PHOTONICS (ADVANCED SOLID-STATE LASERS) 2001, pages 273 - 278, XP002967086**
- **SOMS L.N. ET AL.: 'Problems of depolarization of linearly polarized light by a YAG:Nd laser active element under thermally induced birefringence conditions' SOC. J. QUANTUM ELECTRONICS vol. 10, no. 3, March 1980, pages 350 - 351, XP002967087**

**Description**

Technical Field

The present invention relates to an optical device and, more specifically, to YAG laser.

Background Art

In the related art, there are following references relating to the present invention.

[1]: W. Koechner, Solid-State Laser Engineering (Springer-Verlag, Berlin, 1996), pp.393-412.
[2]: W.C.Scott and M.de Wit, "Birefringence compensation and $TEM_{00}$ mode enhancement in a Nd:YAG laser," Appl.Phys.Lett.18, 3-4 (1971).
[3]: K.Yasui, "Efficient and stable operation of a high-brightness cw 500-W Nd:YAG rod laser," Appl.Opt.35, 2566-2569 (1996).
[4]: W.A.Clarkson, N.S.Felgate, and D.C.Hanna, "Simple method for reducing the depolarization loss resulting from thermally induced birefringence in solid-state lasers," Opt.Lett.24, 820-822 (1999).
[5]: W.Koechner and D.K.Rice, "Effect of birefringence on the performance of linearly polarized YAG:Nd lasers," IEEE J.Quantum Electron. QE-6, 557-566 (1970).
[6]: W.Koechner and D.K.Rice, "Birefringence of YAG:Nd laser rods as a function of growth direction," J.Opt.Soc.Am. 61, 758-766 (1971).
[7]: I.Shoji, Y.Sato, S.Kurimura, V.Lupei, T.Taira, A.Ikesue, and K.Yoshida, "Thermal birefringence in Nd:YAG ceramics," Trends in Optics and Photonics Vol.50, Advanced Solid-State Lasers, C.Marshall, ed. (Optical Society of America, Washington D.C., 2001), pp.273-278.
[8]: L.N.Soms, A.A.Tarasov, and V.V.Shashkin, "Problem of depolarization of linearly polarized light by a YAG:$Nd^{3+}$ laser-active element under thermally induced birefringence conditions," Sov.J.Quantum Electron. 10, 350-351 (1980).
[9]: V.Parfenov, V.Shashkin, and E.Stepanov, "Numerical investigation of thermally induced birefringence in optical elements of solid-state lasers," Appl.Opt.32, 5243-5255 (1993).

When an attempt is made to develop high-power and high-beam-quality of solid-state laser, thermal birefringence generated in medium in association with pumping is a serious problem. In order to obtain a linearly polarized beam by compensating for depolarization generated by thermal birefringence (Ratio of polarized power generated in the perpendicular direction with respect to an initial linearly polarized beam; $D_{pol} = P\perp/P_{initial}$), various devices have been made in arrangement of a laser medium or combination with an optical device.
The effect of thermal birefringence in solid-state laser material caused in association with pumping is a serious problem in achieving high-power and high-beam-quality of laser. It is because it may cause bifocusing or depolarization of the linearly polarized beam (See reference [1]).
These phenomena became a big hurdle in achieving high-power solid-state laser such as YAG. Until now, in order to compensate generated depolarization, several technologies using a 90° rotator or a quarter-wave plate have been proposed (See references [2]-[4]). Such compensation is applied only to (111)-cut YAG crystals. It is because birefringence of a (111)-plane is circularly symmetrical and because the YAG rod is grown in the direction along (111)-direction, and hence using the (111)-cut rod is convenient.
In this manner, a rod grown in the (111)-direction has been used as the YAG crystal, which is a representative laser material in the related art.

Disclosure of Invention

However, as described above, since the direction of propagation of light is set to (111)-axis direction in the YAG laser in the related art, it was necessary to employ a special form such as inserting an additional optical component in a resonator or employing of arrangement such as zigzag slab system in order to eliminate birefringence (thermal birefringence) generated by the photoelastic effect due to thermally induced deformation which may occur in association with pumping.
In view of such circumstances, it is an object of the present invention to provide an optical device which can reduce thermal birefringence effect significantly.
In order to achieve the above-described object, the present invention as defined in claim 1 provides a solid-state laser comprising a (110)-cut crystal rod of radius $r_0$, the laser being operable to cause a beam of radius $r_a$ to propagate through the rod, wherein $r_a < r_0$.

Brief Description of the Drawings

Fig. 1 is a drawing showing a result of measuring dependency of depolarization on direction of depolarization.

Fig. 2 is a drawing showing a result of calculation of dependency of depolarization on an absorbed pump power according to the present invention.

Fig. 3 is a drawing showing dependency of depolarization on the absorbed pump power on (111)-, (100)-, and (110)-planes calculated using the theories in references [5] and [6].

Fig. 4 is a drawing showing a relation between $\theta$ and $\Phi$ on the (111)-, (100)-, and (110)-planes.

Fig. 5 is a drawing showing a result of calculation of $\Omega r^2/r_o^2$ on each plane as a function of $\Phi$.

Fig. 6 shows accurate dependency of depolarization on the absorbed pump power on the (111)-, (100)-, and (110)-planes in the case of $r_a = r_0$.

Fig. 7 is a drawing of low-absorption power area in Fig. 6 enlarged in the horizontal direction.

Fig. 8 is a drawing showing dependency of depolarization on the absorbed pump power based on the result of measurement on the (111)-, (100)-, and (110)-planes.

Fig. 9 is a drawing showing dependency of depolarization on the absorbed pump power on the (111)-, (100)-, and (110)-planes in the case of $r_a = r_0/4$.

Best Mode for Carrying Out the Invention

In a first place, reduction of depolarization of thermally induced birefringence of a YAG crystal of (100)-cut will be described.

In cubic crystals including YAG, when the direction of beam propagation is perpendicular to a (111)-plane, thermal birefringence in the plane is constant irrespective of an angle as long as thermal distribution is axially symmetric.

On the other hand, it depends on angle on the planes other than the (111)-plane.

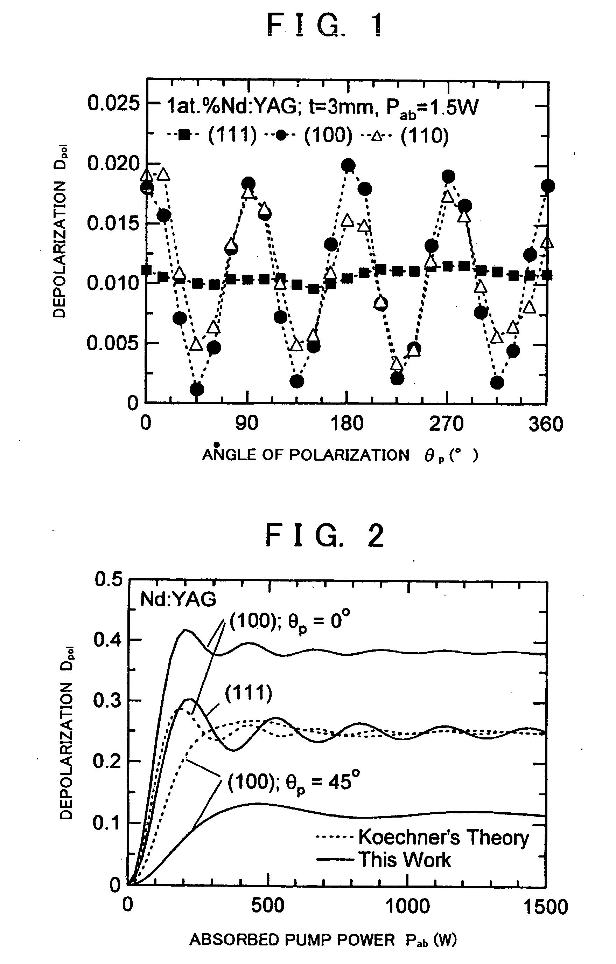

Fig. 1 is a drawing showing a result of measuring dependency of depolarization on the direction of polarization as described above. In this drawing, the lateral axis represents the angle of polarization $\theta_p$ (degrees), and the vertical axis represents depolarization $D_{pol}$. Fig. 2 shows a result of calculation of dependency of depolarization on an absorbed pump power according to the present invention, in which the lateral axis represents an absorbed pump power $P_{ab}(W)$, and the vertical axis represents depolarization $D_{pol}$.

In the past time, Koechner and Rice claimed that depolarization can be reduced to the level lower than that on the (111)-plane by selecting an adequate direction of plane and direction of polarization when the absorbed pump power is small, but little of no difference depending on the direction of plane exists when the absorbed pump power exceeds a certain value (See a dotted line in Fig. 2). Their theory was based on an assumption that birefringence occurs in a plane of axial symmetry between a radius vector and a tangential direction irrespective of the direction of the plane. However, it was found that it was correct, in fact, only for the (111)-plane, and the axis of birefringence does not coincide with the radius vector and the tangential direction for other planes, and the extent of displacement depends on the angle.

The present inventors made an attempt to calculate dependency of depolarization on the absorbed pump power again considering the above described effects, it was found that depolarization can be reduced for a linearly polarized beam forming an angle of 45° with respect to the crystal axis in a (100)-plane to a half level of the linearly polarized beam in the (111)-plane irrespective of the magnitude of absorbed pump power (See a solid line in Fig. 2).

An embodiment of the present invention will now be described.

Here, reduction of depolarization of thermally induced birefringence of a YAG crystal of (110)-cut will be described.

Depolarization is defined as a ratio of depolarized power with respect to an initial linearly polarized laser beam, and is expressed by an expression shown below.

$$D_{pol} = \frac{1}{\pi r_0^2} \int_0^{r_o} \int_0^{2\pi} D \cdot r \cdot d\Phi \cdot dr \quad \ldots$$

The total amount of depolarization D at each point $(r, \Phi)$ in a plane perpendicular to the direction of beam propagation (z-axis) in the cylindrical rod is expressed by the following expression:

$$D=\sin^2[2(\theta-\gamma)]\sin^2(\psi/2) \quad \ldots\ldots(2)$$

Here, $\theta$ represents the angle between the x-axis and one of the birefringence eigenvectors (the principal axes of index ellipse in the xy-plane), and $\gamma$ represents the angle between the x-axis and the direction of initial polarization. The phase difference $\psi$ is given by thermally induced birefringence $\Delta n$ and is expressed as:

$$\psi=(2\pi/\lambda)\Delta nL; \quad \Delta n=\Omega S(r^2/r_0^2);$$

$$S=[\alpha_1/(1-\nu)](\eta_h P_{ab}/16\pi\kappa L) \quad \ldots\ldots(3)$$

respectively. In case of a uniform pumping, $\lambda$ represents the laser wavelength, $\Omega$ represents the birefringence parameter given by the photoelastic coefficient, $r_0$ represents the rod radius, $\alpha_1$ represents the linear expansion coefficient, $\nu$ represents the Poisson ratio, $\eta_h$ represents fractional thermal loading out of pump power, $P_{ab}$ represents the absorbed pump power, $\kappa$ represents the thermal conductively, and L represents the rod length.

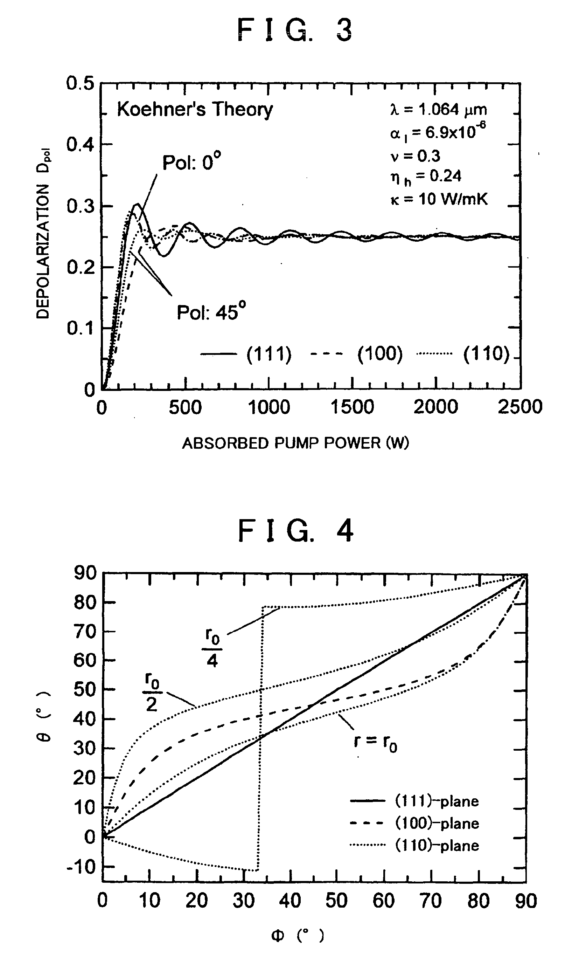

Koechner and Rice analyzed thermally induced birefringence in Nd:YAG rods with various directions (See references [5] and [6]), and concluded that the amount of depolarization at the limit of high absorption power area is independent of rod directions, as shown in Fig. 3. However, there were two mistakes in their theory. One is that they took $\theta=\Phi$ in any plane, which is true only for the (111)-plane. It is because the correct relations between $\theta$ and $\Phi$ for the (111)-, (100)-, and (110)-planes are given by:

$$\tan2\theta=\tan(2\Phi) \quad \ldots\ldots(4a)$$

$$\tan2\theta=[2p_{44}/(p_{11}-p_{12})]\tan(2\Phi) \quad \ldots\ldots(4b)$$

$$\tan2\theta=[8p_{44}\tan(2\Phi)]/$$
$$\{3(p_{11}-p_{12})+2p_{44}-(p_{11}-p_{12}-2p_{44})$$
$$[2-(r_0^2/r^2)][1/\cos(2\Phi)]\} \quad \ldots\ldots(4c)$$

In this equation, $P_{mn}$ represents the photoelastic coefficient tensor and dependency of $\theta$ on $\Phi$ on the (100)-plane is shown by a long-dotted line in Fig. 4. Dependency on the (110)-plane varies with the value of r and is shown by a dotted line in Fig. 4. The other mistake is the values of $\Omega$ on the respective planes. In the references [5] and [6], the value of $\Omega$ is fixed to $r=r_0$ in the equation (3) shown above, and redefined. The correct values of $\Omega$ on the (111)-, (100)-, and (110)-planes are respectively given by:

$$\Omega=(1/3)n_0^3(1+\nu)(p_{11}-p_{12}+4p_{44}) \quad \ldots\ldots(5a)$$

$$\Omega=n_0^3(1+\nu)[(p_{11}-p_{12})^2\cos^2(2\Phi)+$$
$$4p_{44}^2\sin^2(2\Phi)]^{1/2} \quad \ldots\ldots(5b)$$

$$\Omega = n_0{}^3 (1+v) [ (1/16) \{ [3(p_{11}-p_{12})+2p_{44}]$$

$$\cos(2\Phi) - (p_{11}-p_{12}-2p_{44})[2-(r_0{}^2/r^2)] \}^2$$

$$+4p_{44}{}^2\sin^2(2\Phi)]^{1/2} \quad \ldots (5c)$$

Even when it is redefined, the value $\Omega$ does not vary on the (111)- and (100)-planes. However, the value of $\Omega$ depends on r on the (110)-plane, the correct value cannot be obtained.

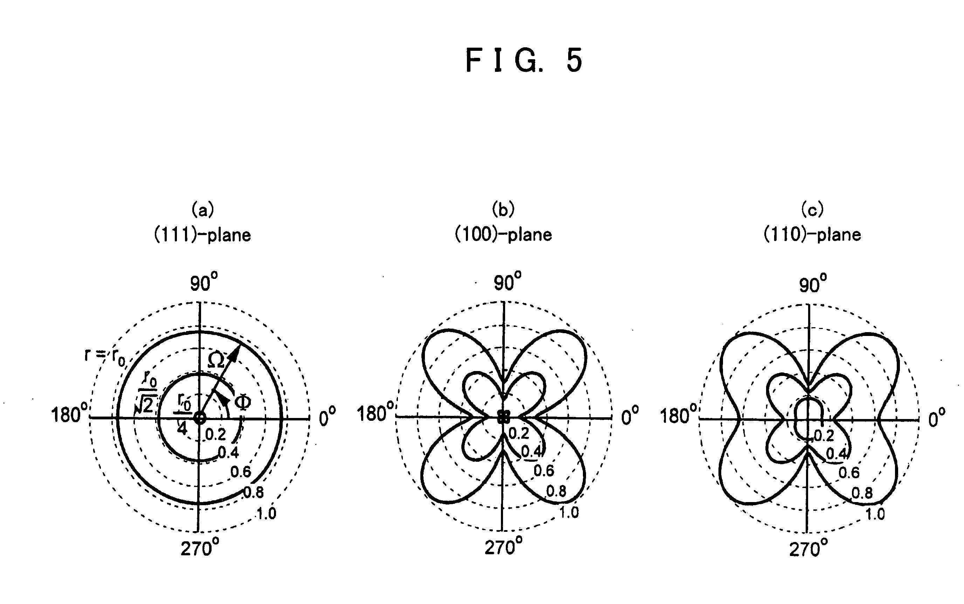

Fig. 5 shows a calculated value of $\Omega r^2/r_0{}^2$ on the respective planes as a function of $\Phi$. On the (111)- and (100)-planes, only the sizes change and the shapes are kept unchanged (the shapes are similar) when the value of r changes. On the other hand, not only the size but also the shape itself changes for the (110)-plane.

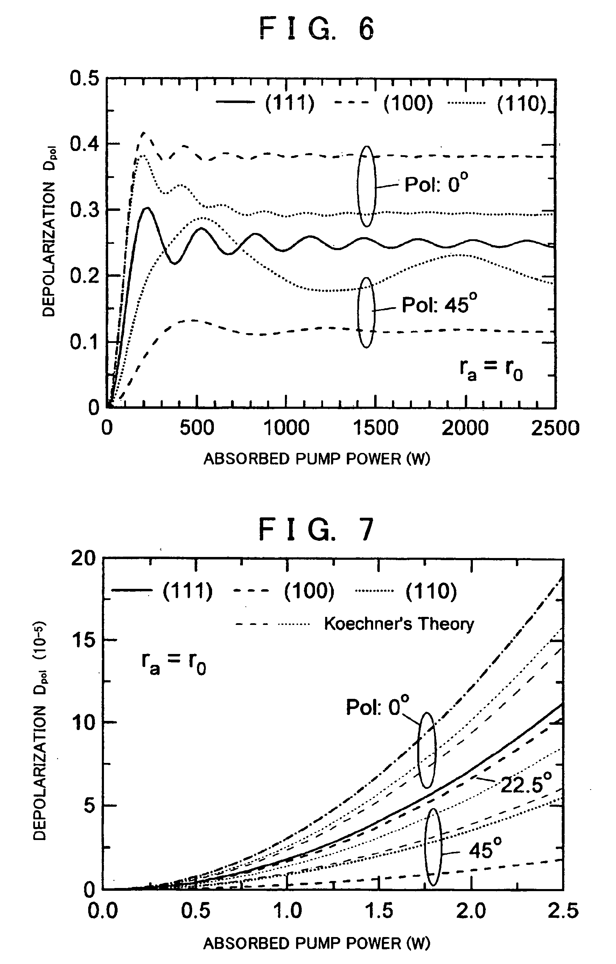

Fig. 6 shows a correct dependency of depolarization on the absorbed pump power when the radius $r_a$ of the laser beam is equal to the rod radius $r_0$. An enlarged drawing of the low-absorption power area in Fig. 6 is shown as Fig. 7.

Depolarization depends on the directions of planes and polarization even at high-absorption power area, and when $r_a=r_0$, it becomes smallest when polarization is 45° in the (100)-plane out of the (111)-, (100), and (110)-planes, the amount for which is half that for the (111)-plane at high-absorption power area and 1/6 at low-absorption power area. It is proved that the calculation made by the inventors was correct by conducting an experiment using the pumping-probe measurement shown in the reference [7].

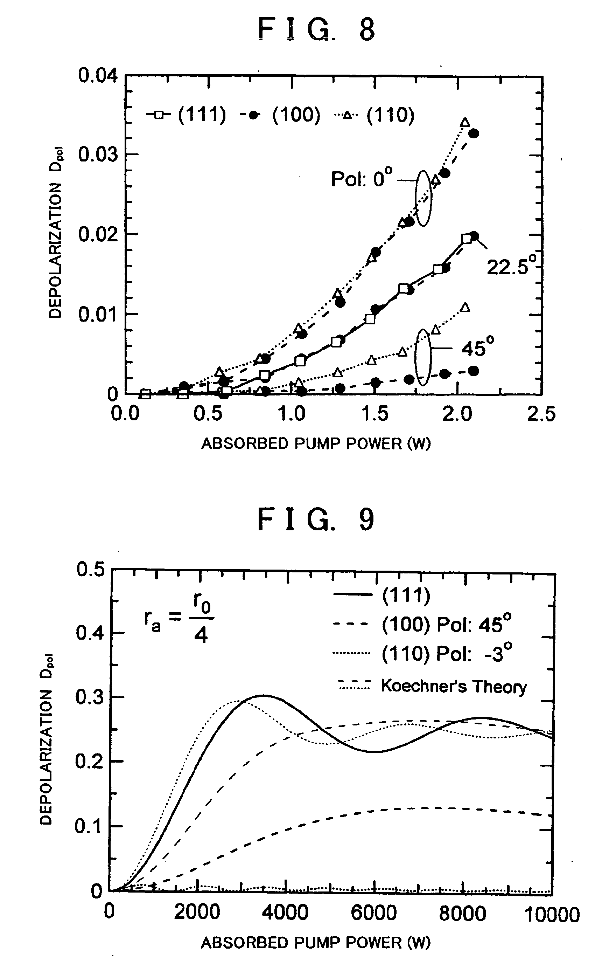

In the experiment, the value was evaluated by end pumping, and hence the absolute values are different. However, the relative values of data of the experiment shown in Fig. 8 substantially coincide with a theoretical curve shown in Fig. 7, and do not coincide with the curves shown in the references [5] and [6].

Although one of the two mistakes in the theories in references [5] and [6] stating that $\theta$ does not coincide with $\Phi$ for plane other than (111) was previously pointed out, dependency of depolarization was calculated correctly only for the (100)-plane (See references [8] and [9]). However, the present inventors found that depolarization can be reduced significantly by using a (110)-cut rod under the condition that $r_a$ is smaller than $r_0$.

As shown in Fig. 4, when r is as large as $r_0$, $\theta$ is close to $\Phi$. In other words, the eigenvectors are directed nearly to the radial and the tangential direction at the respective points.

On the other hand, when r is small, $\theta$ at any $\Phi$ is close to 0° or 90°. This means that all eigenvectors are linearly aligned in the x-axis and y-axis directions. With this feature, when the direction of polarization is close to the x-axis or y-axis direction, a beam with smaller radius than the rod radius can be propagated through the rod almost undepolarized.

Fig. 9 shows an example of dependency of depolarization on the absorbed pump power when $r_a=r_0/4$. Although the amount of depolarization in the (100)-plane is only half that for the (111)-plane, $\Delta n$ itself is reduced to about 1/50 of that for the (111)-plane, even though the (110)-plane is larger than the (111)-plane. Such a condition may be realized by controlling the beam size by an aperture (opening) in case of a uniform pumping.

On the other hand, in case of end pumping, since the focused pump beam itself plays a role as a gain aperture, this condition can be satisfied easily. The same condition can also be realized with composite material such as that composite material in which doped YAG is surrounded by undoped YAG.

As a conclusion, mistakes in reports in references [5] and [6] were proved not only from theory, but also from the experiment, and it was found that depolarization can be essentially reduced by using the (100)- and (110)-planes. In particular, by using the (110)-cut crystal combined with a beam of small radius, depolarization can be reduced by more than one order smaller than the case where a (111)-cut crystal is used.

In this arrangement, depolarization by thermal birefringence effect in $Y_3Al_5O_{12}$ laser may be reduced essentially by the use of the rod cut in the directions other than the (111) without compensation. By using the (110)-cut crystal, depolarization can be reduced to the value 1/10 or below in comparison with the case in which the (111)-cut crystal in the related art is used.

In the aforementioned embodiment, the YAG laser has been described as an example. However, it is not limited to the YAG laser, but may be applied to the optical device using other crystals in equi-axis crystal system, and depolarization of those optical devices may also be reduced.

The present invention is not limited to the aforementioned embodiments, and various modifications may be applied based on the scope of the present invention, and is not excluded from the scope of the invention.

As described above in details, according to the present invention, the following effects are achieved.

(A) The thermal birefringence effect may be reduced only by selecting the direction other than the (111)-axis direction as the direction of beam propagation.

(B) The thermal birefringence effect may be significantly reduced by using a sample of (100)- or (110)-cut.

(C) Depolarization can be reduced by more than one order especially using the (110)-cut medium without compensation in comparison with the case in which the (111)-cut medium is used.

Industrial Applicability

The optical device according to the present invention can reduce the thermal birefringence effect significantly by selecting the (110)-direction of the crystal as the direction of beam propagation, and is suitable for a solid-state laser which can solve a thermal problem.

## Claims

1. A solid-state laser comprising a (110)-cut crystal rod of radius $r_0$, the laser being operable to cause a beam of radius $r_a$ to propagate through the rod, wherein $r_a < r_0$.

2. A solid-state laser according to claim 1, wherein $r_a = r_0/4$.

3. A solid-state laser according to claim 1 or 2, wherein the crystal rod comprises a composite material in which doped YAG is surrounded by undoped YAG.


## Patentansprüche

1. Festkörperlaser, umfassend einen (110)-geschnittenen Kristallstab mit Radius $r_0$, wobei der Laser betreibbar ist, um einen Strahl mit Radius $r_a$ sich durch den Stab ausbreiten zu lassen, wobei $r_a < r_0$ ist.

2. Festkörperlaser nach Anspruch 1, **dadurch gekennzeichnet, daß** $r_a = r_0/4$ ist.

3. Festkörperlaser nach Anspruch 1 oder 2, **dadurch gekennzeichnet, daß** der Kristallstab ein Verbundmaterial umfaßt, in dem dotiertes YAG von undotiertem YAG umgeben ist.


## Revendications

1. Laser à l'état solide comprenant un barreau à cristal de découpe (110) de rayon $r_o$, le laser pouvant être actionné pour provoquer qu'un faisceau de rayon $r_a$ se propage au travers du barreau, dans lequel $r_a < r_o$.

2. Laser à l'état solide selon la revendication 1, dans lequel $r_a = r_o/4$.

3. Laser à l'état solide selon la revendication 1 ou 2, dans lequel le barreau à cristal comprend un matériau composite dans lequel du YAG dopé est entouré par du YAG non dopé.

# FIG. 1

# FIG. 2

## F I G. 3

## F I G. 4

F I G. 5

(a) (111)-plane

(b) (100)-plane

(c) (110)-plane

## F I G. 6

## F I G. 7

# F I G. 8

# F I G. 9